# EUROPÄISCHE PATENTSCHRIFT

(11) **EP 1 050 520 B1**
(45) Veröffentlichungstag und Bekanntmachung des Hinweises auf die Patenterteilung: **10.07.2002**
(21) Anmeldenummer: 00109260.0
(22) Anmeldetag: 28.04.2000
(51) Int. Cl.: C04B 35/624, C04B 35/185

(54) **Supramolekulare Vorstufen zur Herstellung dichter Keramiken**
Supramolecular precursors for production of dense ceramics
Précurseurs supramoléculaires pour la production de céramiques denses

(30) Priorität: 07.05.1999 DE 19921261
(43) Veröffentlichungstag der Anmeldung: 08.11.2000
(73) Patentinhaber: Fraunhofer-Gesellschaft zur Förderung der angewandten Forschung e.V., 80636 München (DE)
(72) Erfinder: Glaubitt, Walther, 97276 Margetshöchheim (DE); Sporn, Dieter, 97074 Würzburg (DE); Oswald, Monika, 97082 Würzburg (DE); Böse, Holger, Dr., 97080 Würzburg (DE)

(56) Entgegenhaltungen:
- US-A- 5 777 057

## Beschreibung

Die Erfindung betrifft ein Verfahren zur Herstellung dichter Keramiken, insbesondere mit der Endzusammensetzung von Mullit, z.B. mit der Stöchiometrie 3Al₂O₃-2SiO₂, unter Verwendung supramolekularer Vorstufen.

Die Chemie der Supramoleküle beschäftigt sich, eingebunden in einen interdisziplinären Rahmen, mit der Synthese und Erforschung der chemischen, physikalischen und biologischen Eigenschaften von molekularen Gebilden großer Komplexität. Die aufbauenden Bestandteile der Supramoleküle werden durch intermolekulare nichtkovalente Bindungen zusammengehalten und organisiert.

Die Synthese supramolekularer Vorstufen für Keramiken hat das Ziel, nichtkovalente intermolekulare Wechselwirkungen wie elektrostatische Kräfte, Wasserstoffbrückenbindungen und Vander-Waals-Kräfte innerhalb definierter Strukturbereiche zu nutzen, um Partikel von bis zu einigen 10 nm Durchmesser in kontrollierter Weise unter Ausbildung supramolekularer Strukturen zu ordnen. Somit entstehen Aggregate definierter Struktur und Funktion, mit denen versucht werden kann, bestimmte keramische Gefüge herzustellen.

Da supramolekulare Systeme im chemischen Sinne an Sol-Gel-Verfahren anknüpfen, sind lösliche und kolloidale Edukte zur Synthese von Supramolekülen geeignet. Im Falle löslicher Edukte wird eine molekulardisperse Route verfolgt, bei der die Mischung der Edukte auf molekularer Ebene erfolgt. Beim Einsatz kolloidaler Edukte spricht man von der kolloiddispersen Syntheseroute; hier werden nanometergroße Al- und Si-haltige Partikel verwendet.

Mullit ist die einzige unter Normaldruck und hohen Temperaturen stabile kristalline Verbindung im System Al₂O₃-SiO₂. Die variable Zusammensetzung von Mullit wird mit der allgemeinen Summenformel Al₂[Al₂₊₂ₓSi₂₋₂ₓ]O₁₀₋ₓ beschrieben. Dabei steht x für die Anzahl an Sauerstoffvakanzen pro Elementarzelle und variiert von x = 0,17 bis x = 0,59. Die Kristallstruktur des Mullits ändert sich in Abhängigkeit von der Zusammensetzung. Als relativ stabil werden zwei Typen angesehen: der pseudotetragonale 2/1-Mullit (d.h. 2Al₂O₃-SiO₂, "t-Mullit") mit x = 0,4 und der orthorhombische 3/2-Mullit (d.h. 3Al₂O₃-2SiO₂, "o-Mullit") mit x = 0,25. Mullit ist bekannt für seine Kriechbeständigkeit, Hochtemperaturstabilität, chemische Resistenz und die geringe thermische Ausdehnung. Für technisch besonders anspruchsvolle Anwendungen von Mullit sind Reinheit und Dichte, Homogenität und moderate Sintertemperaturen von besonderer Bedeutung.

Eine Reihe von Forschungsgruppen hat deshalb die Kristallisation und Sinterung von Vorstufen mullitischer Stöchiometrie untersucht, um bei möglichst niedriger Temperatur ein dichtes mullitisches Gefüge zu erzeugen. Hierbei wurde festgestellt, daß die Kristallisationstemperatur von Mullit entscheidend von den Distanzen für die chemische Interdiffusion der beteiligten Alund Si-Einheiten bestimmt wird. In Folge wurden die mullitischen Vorstufen in drei Bereiche eingeteilt: Pulvermischungen mit Al₂O₃- und SiO₂-Partikeln im Mikrometerbereich, kolloidale Partikel mit einem typischen Größenordnungsbereich von 5 nm bis 50 nm Durchmesser und molekulardispers verteilte Al- und Si-Einheiten.

Von einem der Erfinder der vorliegenden Anmeldung wurde Mullit bereits mit Hilfe eines Sol-Gel-Verfahrens hergestellt (siehe DE 42 33 477 A1, Beispiel 7). Allerdings handelte es sich dabei nicht wie angegeben um reinen Mullit, wie sich aus der Stöchiometrie der Bestandteile leicht errechnen läßt. Die Menge an zugegebenen Tetraethoxysilan betrug nämlich das Doppelte dessen, was für die Herstellung reinen Mullits erforderlich gewesen wäre, so daß eine Nebenphase (SiO₂) entstehen mußte, die jedoch schwer detektierbar ist.

Pulvermischungen erfordern Temperaturen zwischen 1600°C und 1750°C, um Al₂O₃- und SiO₂-Partikel im Mikrometerbereich durch Festkörperreaktion in Mullit umzuwandeln. Für kolloidale Partikel (z.B. aus "peptisiertem" Boehmit und Kieselgel) hingegen fällt die vollständige Umwandlung zu orthorhombischem Mullit auf einen Temperaturbereich zwischen 1300°C und 1450°C. Bei Verwendung einphasiger Gele, in denen eine molekulardisperse Verteilung der Komponenten vorliegt, erreicht man vorwiegend die Kristallisation von pseudotetragonalem Mullit 2Al₂O₃-SiO₂ bei einer Temperatur von 980°C.

Im Hinblick auf das Verdichtungsverhalten jedoch hat sich gezeigt, daß sich die Absenkung der Kristallisationstemperatur auf Temperaturen < 1300 °C negativ auswirkte. Während man sich bei Temperaturen zwischen 1300 °C bis hin zu 1600 °C die in diesem Temperaturbereich zunehmende Fließfähigkeit von SiO₂ nutzbar machen konnte und so eine relative Dichte von > 99 % (Röntgendichte von Mullit beträgt 3.17 g/cm³) erzielte, ist dies bei Kristallisationstemperaturen unterhalb von 1300 °C bisher nicht gelungen. Es wurde deshalb angenommen, daß die frühzeitige Kristallisation die Si-Atome im entstehenden Kristallgitter fixiert und so der vorteilhafte viskose Sinterprozeß, welcher zu einer dichten Keramik führt, verhindert wird (siehe Sacks et al., J. Am Ceram. Soc. 74 (1991) 2428-37).

Es fehlte nicht an Bemühungen, Al- und Si-Atome bereits im amorphen Zustand so zu ordnen, daß sie sich vor Beginn oder während der bei 980°C einsetzenden Kristallisation verdichten lassen. Zu diesem Zweck wurden einphasige Gele erzeugt, in denen eine molekulardisperse Verteilung von Al- und Si-Komponenten vorliegt. Dabei konnte nicht nur gezeigt werden, daß auch solche einphasigen Gele einer unerwünschten Phasentrennung unterliegen können und dadurch die Kristallisationstemperatur wieder auf Temperaturen > 1300 °C ansteigt (siehe Huling et al.; Journal of Non-Crystalline Solids 147, 148 (1992), 213-221 oder Treadwell et al. Chem. Mater. 1996, 2056-2060). Es wurde darüber hinaus deutlich, daß aus einphasigen, molekulardispersen Gelen stets ein mehr oder minder poröses mullitisches Gefüge entstand (siehe Komarneni et al., J. Am. Ceram. Soc. 69 (1986) C 155 - C 156; L. Pach et al., Journal of Materials Science 30 (1995) 5490-5494; Cassidy et al., Journal of Sol-Gel Science and Technology 10 (1997) 19-30).

Aus dem vorstehend zitierten Stand der Technik ergibt sich, daß die Aufgabe eines gezielten Aufbaus von Vorstufen zur Herstellung einer dichten Mullit-Keramik, die bei Temperaturen ≤ 1300°C kristallisiert, bis heute nicht zufriedenstellend gelöst wurde.

Aufgabe der vorliegenden Erfindung ist es daher, eine Zwischenstufe zur Herstellung einer dichten oxidischen Keramik im System Aluminium-Siliciumoxid bereitzustellen. Weiterhin ist es Aufgabe der Erfindung, ein Verfahren zum Herstellen von derartigen Keramiken, d.h. ein solches mit gegenüber dem Stand der Technik gesenkten Sintertemperaturen, bereitzustellen.

Diese Aufgabe wird dadurch gelöst, daß eine supramolekulare, Alund Si-Ionen enthaltende Vorstufe - hier nachstehend auch als Sol bzw. Gel bezeichnet - bereitgestellt wird, die chemisch derart modifiziert ist, daß die Metallatome zwar bereits in einer matrixartigen Verteilung vorliegen und bezüglich dieser Eigenschaft den bisher bekannten "einphasigen" Solen bzw. Gelen mit dem erwünscht hohen Grad der molekularen Dispersion ähnlich sind, in der jedoch die Kondensation dieser Komponenten zu Si-O-Al-Gerüsten durch das Vorhandensein nichtkovalenter Bindungen verhindert wird und selbst bei steigenden Temperaturen nur äußerst langsam einsetzt. So läßt sich der Beginn der Kondensation bei einer Vorstufe der erfindungsgemäßen Art auf ca. 300°C hinauszögern, also eine Temperatur, bei der bei geeigneter Verfahrensführung längst ein Großteil der organischen Bestandteile das System verlassen hat.

Die erfindungsgemäße Vorstufe läßt sich durch geeigneten Lösungsmitteleinsatz in ihren rheologischen Eigenschaften in passender Weise einstellen, so daß nicht nur Bulkmaterialien damit erzeugt werden können, sondern z.B. auch hochtemperaturstabile Komposite im Matrixaufbau (CMC). Spezielle Anwendungsmöglichkeiten sind das Beschichten von Fasern, das Infiltrieren von Fasermatten und das Herstellen von Laminaten mit anschließender Keramisierung.

Des weiteren besitzt die erfindungsgemäße Vorstufe den Vorteil, mindestens mehrere Wochen lagerstabil zu sein.

Um die früh- bzw. vorzeitige Kondensation des erfindungsgemäßen Sols bzw. Gels zu vermeiden, müssen die Al- bzw. Si-Einheiten in einer Umgebung vorliegen, in der Wasserstoffbrückenbindungen die vorhandenen Strukturen vor einem Zusammenbruch bewahren.

Ein notwendiges Kriterium hierfür ist die Bildung einer Aluminiumverbindung, die in Wechselwirkung mit einer Si-haltigen Spezies treten kann, ohne daß hierbei kovalente Al-O-Si-Bindungen entstehen.

Erfindungsgemäß wurde festgestellt, daß dies dann gelingen kann, wenn die Aluminumverbindung keine wesentlichen Mengen an vierfach-koordiniertem Al enthält, weil eine derartige Koordinationssphäre die Voraussetzung für die Bildung von Al-O-Si-Brücken darstellt. Dagegen ist es als günstig anzusehen, wenn das Aluminium vollständig oder zumindest vorwiegend in einer 6-fach koordinierten Umgebung vorliegt.

Wenn daher übliche Aluminium-Alkoxokomplexe mit verzweigten oder unverzweigten Alkoholatgruppen und einer C-Kettenlänge der Alkoholate von z.B. 1-6 als Ausgangsverbindungen gewählt werden, wie z.B. das als Trimeres mit 4- und 5-facher Koordination vorliegende Al(sec-OC₄H₉)₃, was ohne weiteres möglich ist, so muß vor der Vermischung mit der Siliciumkomponente eine geeignete Modifizierung vorgenommen werden, um die Koordinationssphäre zu ändern. Die genannten Aluminiumalkoholate oder andere entsprechende Verbindungen werden daher erfindungsgemäß chemisch modifiziert.

Dabei wurde festgestellt, daß diese Modifizierung bevorzugt mit ethergruppenhaltigen oder anderen tensidartig wirkenden Verbindungen wie Alkoxialkoholen (z.B. C₁-C₄-Alkoxi-C₁-C₆-alkohol) oder dergleichen durchgeführt wird. Die Modifizierung kann erfolgen, indem die Aluminiumverbindung in einer solchen Substanz (oder einer Mischung mehrerer solcher Substanzen) aufgenommen wird.

Natürlich erübrigt sich die obige Modifizierung, wenn die als Ausgangsverbindung gewählte Aluminiumverbindung eine solche ist, in der die Aluminiumatome bereits in einer 6-fachen, z.B. oktaedrischen Struktur vorliegen. Im übrigen kann die Aluminiumverbindung ggf. teilweise in Form eines Aluminiumsalzes vorliegen.

Weiterhin ist es vorteilhaft, auch in der Umgebung der Aluminiumverbindung günstige Voraussetzungen für die Ausbildung von Wasserstoffbrückenbindungen zu schaffen. Hierfür können erfindungsgemäß Carbonsäuren wie Monocarbonsäuren, aber auch Hydroxy- oder anders funktionalisierte Säuren eingesetzt werden. Besonders bevorzugt sind dabei wiederum Carbonsäuren mit Gruppen, die tensidartige Eigenschaften hervorrufen wie Monooder Di-alkoxid-, insbesondere Ethoxygruppen oder dergleichen. Auch Vinylgruppen können vorhanden sein. Beispiele für diese Säuren umfassen Essigsäure, Propionsäure, Capronsäure Ethoxyessigsäure, α-Hydroxyessigsäure und ähnliche. Weiterhin kann die Wahl einer solchen Carbonsäure dazu beitragen, daß sich die Aluminiumatome zumindest überwiegend in einer stabilen 6-fach koordinierten Sphäre anordnen, sofern dies mit der oben beschriebene Modifizierung (noch) nicht vollständig bewirkt wird.

Als Silicium-Ausgangsverbindung sind übliche Alkoxy- oder Acetoxysilane geeignet. Da deren Einsatz nicht kritisch ist, kann die Kettenlänge in geeigneter Weise beliebig gewählt werden, z.B. mit 1-4 C-Atomen, geradkettig oder ggf. verzweigt. Auch ist die Verwendung gegebenenfalls substituierter Alkoxyoder Acetoxygruppen möglich. Eine bequem zugängliche Ausgangsverbindung ist Si(OEt)₄.

Aus den genannten Ausgangssubstanzen wird ein Sol erzeugt. Hierfür wird die ggf. wie oben beschrieben modifizierte Aluminiumverbindung in einem Lösungsmittel aufgenommen, das bevorzugt die genannte Carbonsäure ist, und mit der Siliciumverbindung versetzt. Hierdurch entsteht ein Sol, das beim - bevorzugt - geringen Einsatz von Lösungsmitteln bzw. Säure (zur Erreichung eines hohen Feststoffanteils) meist hoch viskos ist.

In einer Ausgestaltung der vorliegenden Erfindung wird dem Sol ein Teil der Aluminiumatome nicht in Form der oben erwähnten Verbindung zugesetzt, sondern in Form von Aluminium-Salzen wie z.B. Aluminiumnitrat-Nonahydrat. Letzteres wird, z.B. in H₂O gelöst, bevorzugt erst nach der Erzeugung des vorstehend beschriebenen Sols zugesetzt. Dabei sinkt überraschenderweise die Viskosität des Sols stark ab, während man bei herkömmlichen Sol-Gel-Prozessen bei Anwesenheit von Salzen eine Erhöhung der Viskosität infolge einer Reduzierung der Dicke der elektrochemischen Doppelschicht beobachtet. Es ist zu vermuten, daß die Anwesenheit von Al-Ionen die Wechselwirkungen zwischen den Al-O-Spezies verändert. Obwohl man aufgrund der besseren Beweglichkeit der Teilchen nun ein Zusammenbrechen der Matrix erwarten sollte, findet dieses nicht statt; statt dessen bildet sich zwischen den Al- und Si-Einheiten ein supramolekulares Netzwerk aus. Weiterhin hat sich herausgestellt, daß durch diesen Zusatz der Feststoffgehalt des Sols - bei akzeptablen rheologischen Eigenschaften - wesentlich höher gewählt werden kann.

Das wie voranstehend gebildete Sol wird anschließend hydrolysiert. Im Falle des Zusatzes von Aluminiumnitrat-Nonahydrat wird zumindest ein Teil des hierfür erforderlichen Wassers bereits als Kristallwasser dieser Verbindung eingeführt. Weiteres Wasser kann als Lösungsmittel für das einzumischende Aluminiumnitrat dienen. Überraschenderweise wurde dabei festgestellt, daß die Stöchiometrie der Ausgangskomponenten nur dann beibehalten werden kann, wenn die zuzusetzende Wassermenge unabhängig von der gewählten Ausgestaltung der Erfindung annähernd zwischen 1,5 und 2 Mol beträgt, bezogen auf die Summe der hydrolysierbaren Aluminium- und Siliciumatome pro Mol Aluminium. Es wurde nämlich festgestellt, daß dann, wenn eine deutlich zu geringe Wassermenge der Mischung zugesetzt wird, zu wenig Siliciumverbindung hydrolysiert wird. Bei der anschließenden Erwärmung der Mischung wird dann diese nichthydrolysierte Verbindung aus dem System entweichen, so daß die vorgesehene Stöchiometrie nicht eingehalten wird. Wird jedoch zuviel Wasser zugesetzt, muß mit der Bildung von teilkristallisiertem Aluminiumcarboxylat oder der Bildung von größeren Aluminium- und Silicium-haltigen Partikeln gerechnet werden. Beim anschließenden Erhitzen einer solchen Mischung wird dann beim Erreichen von etwa 500-900°C eine Phasenseparation und das Kristallisieren von Nebenphasen (Al₂O₃) beobachtet. Geeignet sind daher vor allem Wassermengen im Bereich von 1,3 bis 1,7, bevorzugt 1,4 bis 1,6 und ganz besonders bevorzugt etwa 1,5 Mol H₂O pro Mol hydrolysierbare Aluminiumverbindung,(unter der Voraussetzung, daß diese Verbindung 1 Aluminiumatom enthält, wie z.B. die Aluminiumalkoxylate), und 0,8 bis 1,2, bevorzugt 0,9 bis 1,1 und ganz besonders bevorzugt etwa 1,0 Mol H₂O pro Mol Silicium. Zur Herstellung eines 3/2-Mullits (3Al₂O₃ x 2SiO₂) ist daher eine Wassermenge von etwa 1,83 Mol/Mol Al-Atome am besten geeignet.

Nach Beendigung der Hydrolyse, die meist bei Raumtemperatur erfolgt, werden dem Sol die freien organischen Komponenten entzogen, z.B. durch Destillation bei reduziertem Druck und/oder erhöhter Temperatur. Die Temperatur sollte dabei ca. 150°C nicht übersteigen, um die an das Aluminium und das Silicium gebundenen organischen Gruppen nicht anzugreifen. Durch diesen Schritt erhält man ein "trockenes", festes Gel. Der "Oxidgehalt" (die Summe von SiO₂ und Al₂O₃) dieses Xerogels kann dabei auf bis zu ca. 60 Masse-% oder sogar mehr gesteigert werden; ein Oxidgehalt von etwa 30 Masse-% ist dabei häufig bereits ausreichend.

Dieses Gel ist in einem geschlossenen Gefäß bei Raumtemperatur über mehrere Wochen und Monate hin lagerstabil.

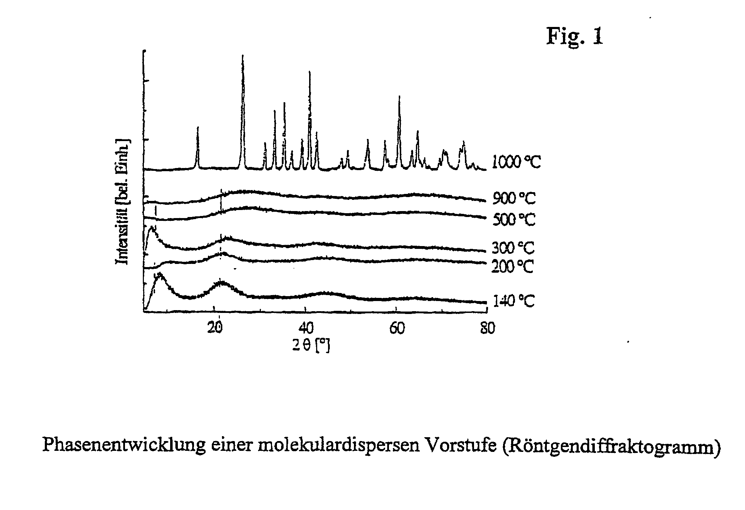

Das Gel wird durch Erhitzen in eine Keramik überführt. Dabei wurde folgendes festgestellt (siehe Figur 1): Bei 140°C zeigt das Röntgendiffraktogramm ein Beugungsmaximum bei 2 θ = 8,5°. Dieses verschwindet nach einer Temperaturbehandlung bei 200°C, um nach einer Temperaturerhöhung auf 300°C erneut zu entstehen, diesmal zu einem 2 θ-Wert von ca. 6,7° verschoben. Diese Beugungsmaxima können mit der Bildung von supramolekularen Strukturen erklärt werden. Nach einer Temperung bei 500°C ist die Organik komplett entfernt, und das Beugungsmaximum ist verschwunden. Ab 980°C findet dann ohne Ausbildung von Nebenphasen die direkte Kristallisation von Mullit statt, d.h. das erfindungsgemäße einphasige Gel läßt sich in eine einphasige mullitische Keramik überführen.

Überraschenderweise resultiert aus der Temperaturbehandlung des oben beschriebenen Gels eine sehr dichte und homogene Keramik, was sich im Transmissionselektronenmikroskop nachweisen läßt. Dagegen erhält man aus molekulardispersen Solen bzw. Gelen normalerweise sehr poröse Keramiken. Daraus ist zu schließen, daß das Auftreten supramolekularer Strukturen in der Vorstufe zu einem solch geordneten Abbau der organischen Bestandteile während der Temperaturbehandlung führt, daß die Bildung von Poren unterbleibt und dadurch die Sinterung vor Beginn des Kristallisationsprozesses begünstigt wird. Nach einer einstündigen Temperung bei 1000°C wurde eine Dichte von 3,01 g/cm³ erreicht, die sich bei 1300°C (3h) noch auf 3,14 g/cm³ steigern läßt, was 99% der theoretischen Dichte von Mullit entspricht.

Mit Hilfe des erfindungsgemäßen Sols wurden oxidische Fasermatten beschichtet und hieraus Formstücke mit ausreichender Grünfestigkeit hergestellt.

Zum Vergleich der erfindungsgemäß aufgefundenen Parameter und Zustände des vorstehend beschriebenen Verfahrens ("molekulardisperse Syntheseroute") wurde eine kolloidaldisperse Syntheseroute erarbeitet.

Diese Syntheseroute geht von einer kolloidalen Al₂O₃-Vorstufe und einer kolloidalen SiO₂-Vorstufe aus. Geeignet sind z.B. Al-haltige Partikel im Bereich von 2-10 nm und Si-haltige Partikel im Bereich von 10 - 70 nm. So kann z.B. eine Mischung aus einer Al₂O₃-Vorstufe "Al₂O₃-Sol" in H₂O, einer Laborentwicklung der Merck KGaA mit einer Partikelgröße von 4 nm, und einer SiO₂-Vorstufe "SiO₂-Sol" in H₂O, ebenfalls einer Laborentwicklung der Merck KGaA mit einer Partikelgröße von 25 nm, verwendet werden. Die Partikelgrößen wurden im konkreten Fall durch Röntgenkleinwinkelstreuung bestimmt. Diese beiden Vorstufen, die in Wasser vorliegen, werden in der mullitischen Stöchiometrie gemischt, und es entsteht während der Temperaturbehandlung ab 1200°C Mullit.

Bei Untersuchungen der bei verschiedenen Temperaturen behandelten Proben im Transmissionselektronenmikroskop lassen sich Poren beobachten: Vermutlich entstehen beim Aneinanderlagern der Partikeln Hohlräume, die während der Sinterung nicht geschlossen werden. Die Skelettdichte beträgt nach einer Temperung bei 1300°C (3h) 2,93g/cm³. Auch bei diesem System handelt es sich um eine supramolekulare Vorstufe: mit Hilfe von ζ-Potential-Messungen ließen sich nichtkonvalente Wechselwirkungen nachweisen. Das ζ-Potential der SiO₂-Vorstufe verändert sich bei Zugabe der Al₂O₃-Vorstufe von nahezu neutral (bei gegebenem pH-Wert) nach positiv, so daß davon auszugehen ist, daß sich die positiv geladenen Al-haltigen Partikel an die Si-haltigen, vermutlich in Form einer Schale, angelagert haben. Die Vorstufe ist mittels Abdestillieren des Lösungsmittels auf max. 25 Masse-% Oxidgehalt bei zufriedenstellenden rheologischen Eigenschaften, d.h. mit noch guter Verarbeitbarkeit, aufkonzentrierbar. Der Oxidgehalt im getrockneten Gel beträgt 56 Masse-%, die Langzeitstabilität des Sols überschreitet bei Lagerung im Kühlschrank (6-8°C) vier Wochen.

Neben dieser Möglichkeit bietet sich mit kolloidalen Kieselgelen mit der Bezeichnung "Ludox®" von DuPont ebenfalls eine siliciumhaltige Komponente auf wäßriger Basis an, die in Verbindung mit der Al₂O₃-Vorstufe von Merck bereits ab 1000°C Mullit bildet.

Dieses Vorstufengemisch läßt sich bei guten rheologischen Eigenschaften auf etwa 30 Masse-% Oxidgehalt durch teilweises Abdestillieren des Lösungsmittels aufkonzentrieren, der Oxidgehalt des getrockneten Gels beträgt 52 Masse-%.

Allerdings läßt die Grünfestigkeit der hergestellten Formstücke zu wünschen übrig, da das Werkstück bei der Nachbearbeitung mit wassergekühlten Schneidwerkzeugen aufquillt.

Um die Vorzüge der molekulardispersen Vorstufe (dichte Oxidkeramik) mit denen der kolloiddispersen Vorstufe (hoher Oxidgehalt bei guter Verarbeitbarkeit und ökologischer Unbedenklichkeit durch Wasser als Lösungsmittel) zu verbinden, können die zwei entsprechend hergestellten Sole gemischt werden. Es können dabei beliebige Mischungsverhältnisse bis zu mehr als 100:1, bezogen auf die Oxidmasse der kolloiddispersen Vorstufen zur Oxidmasse der molekulardispersen Vorstufe, eingesetzt werden. Neben der Verdichtung der Keramik kolloiddispersen Ursprungs, indem die molekulardispersen Bestandteile die Partikel umlagern und bei der Temperaturbehandlung die Poren ausfüllen, wird die Grünfestigkeit erhöht, so daß außerdem die Nachbearbeitung der Formstücke vereinfacht wird. Die Umwandlung der kombinierten Vorstufe zu Mullit beginnt wie bereits bei der kolloiddispersen Route bei 1200 °C und ist nach einer dreistündigen Behandlung bei 1300°C abgeschlossen. Durch den Zusatz der molekulardispersen Vorstufe zur kolloiddispersen kann die Dichte des resultierenden Mullits erhöht werden, z.B. von 2,93g/cm³ auf 3,04g/cm³ bei einem Oxidmasse-Verhältnis der Vorstufen von 1:100. Der Oxidgehalt im getrockneten Gel kann bis mindestens etwa 56 Masse-% betragen.

### Durchführungsbeispiele

### Beispiel 1: Molekulardisperse Vorstufe

22,4g Aluminium-sec-butylat werden mit 9,4g Isopropoxyethanol umgesetzt, in 33,3g Propionsäure aufgenommen und gerührt. Ebenfalls unter Rühren werden 6,87g Tetraethoxysilan zugegeben. Separat werden 3,36g Aluminiumnitrat-Nonahydrat in 1,60g Wasser gelöst. Die Lösung wird zur Hydrolyse der Alkoxide der Mischung zugefügt. Nach 12 Stunden Rühren wird dem Sol mit Hilfe einer Destillationsbrücke unter reduziertem Druck bei bis zu 140°C das Lösungsmittel bis zur Trockene entzogen.

Die Umwandlung zur dichten Mullitkeramik (hier mit der Stöchiometrie 3Al₂O₃ x 2SiO₂) erfolgte durch Temperung bei 1000°C mit einer Haltezeit von 1 Stunde.

### Beispiel 2: Kolloiddisperse und molekulardisperse Vorstufe in Kombination

Zu 74,35g Al₂O₃-Vorstufe ("Al₂O₃-Sol" von Merck KGaA) werden 25,65g SiO₂-Vorstufe ("SiO₂-Sol" von Merck KGaA) gegeben und die Mischung wird gerührt. Anschließend werden zu 1g molekulardispersem Sol 99g kolloiddisperses Sol gegeben, und die Mischung wird 48 Stunden lang gerührt. Die Mischung wird bei 130°C (3h) im Umluftofen getrocknet und anschließend getempert. Die Umwandlung zu Mullit erfolgt oberhalb 1200°C und ist nach einer Temperung bei 1300°C (3h) abgeschlossen.

Bei allen Temperaturbehandlungen wurden die Proben unter Normalatmosphäre mit 5K/min auf die Haltetemperatur gebracht, die Abkühlung der Proben nach der jeweiligen Haltezeit erfolgte im geschlossenen Ofen, wobei dieser ungeregelt abkühlte.

### Beispiel 3:

Nextel®610-Gewebestücke wurden mit dem Sol des Beispiels 1 imprägniert. Die Bindungseigenschaften waren im Grünzustand gut, und das Laminieren der Gewebestücke war problemlos möglich. Es zeigte sich ferner, daß oxidische Fasern mit den erfindungsgemäßen Solen sehr gut benetzt werden.

## Patentansprüche

1. Aluminium- und Siliciumionen enthaltendes, supramolekulares Sol, erhältlich unter Anwendung der folgenden Schritte:
- Vermischen mindestens einer Aluminiumverbindung mit mindestens einem Alkoxysilan und/oder mindestens einem Acyloxysilan, und
- Hydrolysieren der Mischung in Gegenwart von Wasser, wobei
(a) die oder mindestens eine der Aluminiumverbindung(en) eine Koordinationsverbindung mit tensidartige Eigenschaften verleihenden Gruppen ist und/oder
(b) die Aluminiumverbindung(en) in einer Carbonsäure vorliegt/vorliegen,
mit der Maßgabe, daß sich zumindest dann, wenn nur eines der Merkmale (a) oder (b) ausgewählt ist, die Aluminiumatome der genannten Aluminiumverbindung(en) in einer ausschließlich oder im wesentlichen nicht vierfachen Koordinationssphäre befinden,
**dadurch gekennzeichnet, daß** das Hydrolysieren mit einer Wassermenge von 1,3 bis 1,7 Mol Wasser pro Mol Aluminium, das in einer hydrolysierbaren Verbindung vorliegt, und 0,8 bis 1,2 Mol Wasser pro Mol Silicium erfolgt.

2. Supramolekulares Sol nach Anspruch 1, **dadurch gekennzeichnet, daß** der Mischung weiterhin mindestens ein anorganisches Aluminiumsalz zugesetzt wird.

3. Supramolekulares Sol nach Anspruch 1 oder 2, dadurch erhältlich, daß die Aluminiumverbindung(en) in einem Lösungsmittel und/oder der Carbonsäure aufgenommen und die gebildete Mischung gerührt wird, worauf das Silan und anschließend eine geeignete Menge an Wasser, ggf. zusammen mit dem darin gelösten Aluminiumsalz, zugesetzt und das Rühren bis zum Abschluß der Hydrolyse fortgesetzt werden.

4. Supramolekulares Sol nach einem der voranstehenden Ansprüche, worin die Aluminiumverbindung ausgewählt ist unter Aluminiumalkoholaten, deren Alkoholgruppen zumindest teilweise etherhaltig und/oder verzweigt sind, und/oder worin die Carbonsäure ausgewählt ist unter Mono-, Di- oder Tricarbonsäuren, die fakultativ Alkoxygruppen und/oder Hydroxygruppen und/oder Allylgruppen enthalten, und/oder worin das Aluminiumsalz Aluminiumnitrat-Nonahydrat ist.

5. Supramolekulares Sol nach einem der voranstehenden Ansprüche, worin die Aluminiumverbindung mit Isopropoxyethanol umgesetztes Aluminium-sec-Butylat ist und/oder das Silan Tetraethoxysilan ist und/oder als Lösungsmittel Propionsäure eingesetzt wird.

6. Supramolekulares Sol nach einem der voranstehenden Ansprüche, **gekennzeichnet durch** zusätzliche Verwendung von kolloidalem Aluminiumoxid und kolloidalem Siliciumdioxid beim Aufbau des Sols.

7. Supramolekulares Sol nach Anspruch 6, erhältlich durch Erzeugung eines Sols mit 20 bis 60 Masse-%, bevorzugt etwa 30 Masse-% Oxidgehalt, aus kolloidalen Al₂O₃-Vorstufen und kolloidalen SiO₂-Vorstufen in Wasser und Vermischen dieses Sols mit einem Sol nach einem der Ansprüche 1 bis 5 im Verhältnis von 1 zu 1 bis 125 zu 1, bevorzugt im Verhältnis von etwa 100 zu 1.

8. Supramolekulares Sol nach einem der voranstehenden Ansprüche, worin die Aluminium- und die Siliciumverbindungen in solchen Mengen eingesetzt werden, daß das molare Verhältnis der Aluminium- zu den Siliciumionen im gebildeten Sol 3 zu 1 beträgt.

9. Supramolekulares Gel, erhältlich aus einem Sol nach einem der Ansprüche 1 bis 8, indem diesem die freien organischen Komponenten und ggf. vorhandenes Wasser bei reduziertem Druck und/oder erhöhter Temperatur entzogen werden.

10. Verfahren zum Herstellen hochdichter Mullitkeramiken, **dadurch gekennzeichnet, daß** ein Sol oder Gel nach einem der voranstehenden Ansprüche bis zu einer Temperatur von mindestens 980°C erhitzt wird.

## Claims

1. Supramolecular sol containing aluminium- and silicon ions, obtainable by applying the following steps:
· mixing at least one aluminium compound with at least one alkoxysilane and/or at least one acyloxysilane, and
· hydrolysing the mixture in the presence of water,
a) the aluminium compound(s) or at least one of the aluminium compounds being a coordination compound with groups imparting surfactant-like properties and/or
b) the aluminium compound(s) being present in a carboxylic acid,
with the proviso that at least in the case where only one of the features (a) or (b) is chosen, the aluminium atoms of the mentioned aluminium compound(s) are situated in an exclusively or essentially non-tetracoordinated sphere,
**characterised in that** the hydrolysing is effected with a water quantity of 1.3 to 1.7 mol of water per mol of aluminium, which is present in a hydrolysable compound, and 0.8 to 1.2 mol of water per mol of silicon.

2. Supramolecular sol according to claim 1, **characterised in that** at least one inorganic aluminium salt is added in addition to the mixture.

3. Supramolecular sol according to claim 1 or 2, obtainable in that the aluminium compound(s) is contained in a solvent and/or in the carboxylic acid and the formed mixture is agitated, whereupon the silane and subsequently a suitable quantity of water, if necessary together with the aluminium salt dissolved therein, is added and agitation is continued up to completion of the hydrolysis.

4. Supramolecular sol according to one of the preceding claims, in which the aluminium compound is chosen from among aluminium alkoxides, the alcohol groups of which are at least partially ether-containing and/or branched, and/or in which the carboxylic acid is chosen from among mono-, di- or tricarboxylic acids which facultatively contain alkoxy groups and/or hydroxy groups and/or allyl groups, and/or in which the aluminium salt is aluminium nitrate nonahydrate.

5. Supramolecular sol according to one of the preceding claims, in which the aluminium compound is aluminium-sec-butylate converted with isopropoxyethanol and/or the silane is tetraethoxysilane and/or propionic acid is used as solvent.

6. Supramolecular sol according to one of the preceding claims, **characterised by** additional use of colloidal aluminium oxide and colloidal silicon dioxide during synthesis of the sol.

7. Supramolecular sol according to claim 6, obtainable by production of a sol having an oxide content of 20 to 60 % by mass, preferably approximately 30 % by mass, from colloidal Al₂O₃ precursors and colloidal SiO₂ precursors in water and mixing of this sol with a sol according to one of the claims 1 to 5 in the ratio of 1 to 1 up to 125 to 1, preferably in the ratio of approximately 100 to 1.

8. Supramolecular sol according to one of the preceding claims, in which the aluminium- and the silicon compounds are used in such quantities that the molar ratio of the aluminium ions to the silicon ions in the formed sol is 3 to 1.

9. Supramolecular gel, obtainable from a sol according to one of the claims 1 to 8, by removal from said sol of the free organic components and water which is possibly present during reduced pressure and/or increased temperature.

10. Method for production of high density mullite ceramics, **characterised in that** a sol or gel according to one of the preceding claims is heated up to a temperature of at least 980 °C.

## Revendications

1. Sol supramoléculaire contenant des ions aluminium et silicium, que l'on peut obtenir en réalisant les étapes suivantes :
- mélange d'au moins un composé aluminium avec au moins un alcoxysilane et/ou un acyloxy silane et
- hydrolyse du mélange en présence d'eau et
(a) le ou au moins l'un des composés d'aluminium est un composé de coordination ayant des groupes conférant des propriétés de type tensioactif et/ou
(b) le ou les composés d'aluminium se présente(nt) dans un acide carboxylique,
sous réserve qu'au moins lorsque seule l'une des caractéristiques (a) ou (b) est choisie, les atomes d'aluminium du ou des composés d'aluminium mentionnés se trouvent dans une sphère de coordination exclusivement ou essentiellement non quadruple,
**caractérisé en ce que**
l'hydrolyse s'effectue avec une quantité d'eau de 1,3 à 1,7 mole d'eau par mole d'aluminium, qui se présente dans un composé hydrolysable, et de 0,8 à 1,2 mole d'eau par mole de silicium.

2. Sol supramoléculaire selon la revendication 1,
**caractérisé en ce qu'**
on ajoute en outre au mélange au moins un sel d'aluminium inorganique.

3. Sol supramoléculaire selon la revendication 1 ou 2,
**caractérisé en ce qu'**
on l'obtient en absorbant le ou les composés aluminium dans un solvant et/ou l'acide carboxylique et en agitant le mélange formé en y ajoutant ensuite le silane puis une quantité appropriée d'eau avec le cas échéant le sel d'aluminium qui y est dissous, et l'agitation étant poursuivie jusqu'à la fin de l'hydrolyse.

4. Sol supramoléculaire selon l'une des revendications précédentes,
dans lequel
le composé d'aluminium est choisi parmi les alcoolates d'aluminium dont les groupes alcools contiennent au moins partiellement des éthers et/ou sont ramifiés, dans lequel l'acide carboxylique est choisi parmi les acides mono-, di- ou tricarboxyliques qui contiennent facultativement des groupes alcoxy et/ou des groupes hydroxy et/ou des groupes allyles, et/ou dans lequel le sel d'aluminium est le nitrate d'aluminium nonahydraté.

5. Sol supramoléculaire selon l'une des revendications précédentes,
dans lequel
le composé d'aluminium est le sec-butylate d'aluminium que l'on a fait réagir avec de l'isopropoxy éthanol et/ou le silane est le tétraéthoxysilane et/ou on utilise comme solvant l'acide propionique.

6. Sol supramoléculaire selon l'une des revendications précédentes,
**caractérisé par** l'utilisation supplémentaire d'oxyde d'aluminium colloïdal et de dioxyde de silicium colloïdal lors de la constitution du sol.

7. Sol supramoléculaire selon la revendication 6,
**caractérisé en ce qu'**
on peut obtenir par la production d'un sol avec de 20 à 60 % massique, de préférence environ 30 % massique, de teneur en oxyde, à partir de précurseurs d'Al₂O₃ colloïdal et de précurseurs de SiO₂ colloïdal dans l'eau et mélange de ce sol avec un sol selon l'une des revendications 1 à 5 dans un rapport de 1 pour 1 à 125 pour 1, de préférence dans un rapport d'environ 100 pour 1.

8. Sol supramoléculaire selon l'une des revendications précédentes,
dans lequel
les composés d'aluminium et les composés de silicium sont utilisés en des quantités telles que le rapport molaire des ions aluminium aux ions silicium dans le sol formé s'élève à 3 pour 1.

9. Gel supramoléculaire,
que l'on peut obtenir à partir d'un sol selon l'une des revendications 1 à 8, en y retirant les composants organiques libres et les cas échéant l'eau présente à pression réduite et/ou à température augmentée.

10. Procédé de production de céramiques de mullite de haute densité,
**caractérisé en ce qu'**
on chauffe un sol ou un gel selon l'une des revendications précédentes jusqu'à une température d'au moins 980°C.
